# EUROPÄISCHE PATENTANMELDUNG

(11) **EP 4 785 776 A1**
(43) Veröffentlichungstag der Anmeldung: **05.08.2026**
(21) Anmeldenummer: 26151981.3
(22) Anmeldetag: 15.01.2026
(51) Int. Cl.: A01D 41/127, G01N 21/85

(54) **ANALYSEVORRICHTUNG ZUR BESTIMMUNG DER QUALITÄT VON GRANULAREM ERNTEGUT**

(30) Priorität: 04.02.2025 DE 102025103970
(71) Anmelder: CLAAS Selbstfahrende Erntemaschinen GmbH, 33428 Harsewinkel (DE)
(72) Erfinder: Thiesmann, Waldemar, 49080 Osnabrück (DE); Bormann, Bastian, 33334 Gütersloh (DE); Schröder, Maximilian, 33330 Gütersloh (DE); Jensen, Axel, 3200 Helsinge (DK); Bürger, Alexander, 33442 Herzebrock-Clarholz (DE)
(74) Vertreter: CLAAS Gruppe

(57) **Zusammenfassung**

Die vorliegende Erfindung betrifft eine Analysevorrichtung (1) zur Bestimmung der Qualität von granularem Erntegut (EG) in einem Erntegutstrom, mit einer Fördervorrichtung (2) für das Erntegut (EG), einer optischen Sensoreinrichtung (3) zur Erfassung des mittels der Fördervorrichtung (2) in einer Strömungsrichtung (SR) geförderten Erntegutes (EG) sowie einer Auswertevorrichtung (4) zur Auswertung von Signalen der Sensoreinrichtung (13), wobei die Fördervorrichtung (2) eine vom Erntegutstrom überströmte Konditioniereinrichtung (9) mit einem der optischen Sensoreinrichtung (3) vorgelagerten Abschnitt (10) umfasst, welcher eine den Erntegutstrom beeinflussende Oberflächenstruktur (11) aufweist, wobei die Oberflächenstruktur (11) dazu ausgeführt und eingerichtet ist, Turbulenzen in dem die Konditioniereinrichtung (9) überströmenden Erntegutstrom zu erzeugen.

## Beschreibung

Die vorliegende Erfindung betrifft eine Analysevorrichtung zur Bestimmung der Qualität von granularem Erntegut in einem Erntegutstrom gemäß dem Oberbegriff des Anspruches 1.

Aus der DE 10 2022 121 838 A1 ist ein selbstfahrender Mähdrescher mit einer Analysevorrichtung zur Bestimmung der Qualität von Korn als granularem Erntegut in einem Erntegutstrom bekannt. Mittels einer als Kornelevator ausgeführten Fördervorrichtung wird in einem vorangehenden Dresch-, Abscheide- und Reinigungsprozess von Nichtkornbestandteilen separiertes Korn einem Korntank des Mähdreschers zugeführt. Der Kornelevator weist eine endlos umlaufende Förderkette auf, an welcher plattenförmige Förderelemente zur Förderung der Körner angeordnet sind. Eine optische Sensoreinrichtung ist im oberen Umlenkbereich der Förderkette lösbar angeordnet, welche Bilddaten generiert und an eine Auswertevorrichtung zur Auswertung von Signalen der optischen Sensoreinrichtung überträgt. Die Auswertevorrichtung dient zur Ermittlung der Erntegutparameter Bruchkornanteil und Nichtkornbestandteil im geförderten Erntegut basierend auf einer Bildanalyse einer aufgenommenen Bildserie. Die durch die Bildanalyse bestimmten Informationen zu den Erntegutparametern Bruchkornanteil und Nichtkornbestandteil werden zur Ansteuerung der Arbeitsaggregate des Mähdreschers verwendet, um Einstellung der Arbeitsaggregate an sich ändernde Einsatzbedingungen anzupassen. Zur Bestimmung der Erntegutparameter Bruchkornanteil und Nichtkornbestandteil kommen spezifische bildauswertende Algorithmen zum Einsatz, die in der Auswertevorrichtung hinterlegt sind. Nachteilig ist, dass die optische Sensoreinrichtung des Mähdreschers nicht universell einsetzbar ist, sodass die Nutzung der Sensoreinrichtung durch den eng begrenzten Erntezeitraum, in welchem der Mähdrescher und damit die Sensoreinrichtung zum Einsatz kommt, stark limitiert ist.

Ausgehend vom vorstehend genannten Stand der Technik liegt der Erfindung die Aufgabe zugrunde, eine Analysevorrichtung der eingangs genannten Art weiterzubilden, die einen über den Einsatz in einem Mähdrescher hinausgehenden Zeitraum und hiervon abweichenden und unabhängigen Einsatzbereich der optischen Sensoreinrichtung ermöglicht.

Diese Aufgabe wird durch eine Analysevorrichtung mit den Merkmalen des Anspruches 1 gelöst. Vorteilhafte Weiterbildungen sind Gegenstand der abhängigen Ansprüche.

Gemäß dem Anspruch 1 wird eine Analysevorrichtung zur Bestimmung der Qualität von granularem Erntegut in einem Erntegutstrom, mit einer Fördervorrichtung für das Erntegut, einer optischen Sensoreinrichtung zur Erfassung des mittels der Fördervorrichtung in einer Strömungsrichtung geförderten Erntegutes sowie einer Auswertevorrichtung zur Auswertung von Signalen der Sensoreinrichtung vorgeschlagen. Erfindungsgemäß ist vorgesehen, dass die Fördervorrichtung eine vom Erntegutstrom überströmte Konditioniereinrichtung mit einem der optischen Sensoreinrichtung vorgelagerten Abschnitt umfasst, welcher eine den Erntegutstrom beeinflussende Oberflächenstruktur aufweist, wobei die Oberflächenstruktur des Abschnitts dazu ausgeführt und eingerichtet ist, Turbulenzen in dem die Konditioniereinrichtung überströmenden Erntegutstrom zu erzeugen.

Wesentlich ist die grundsätzliche Überlegung, dass ein abweichender, von der Erntemaschine unabhängiger Einsatz der optischen Sensoreinrichtung in einer Analysevorrichtung zur Bestimmung der Qualität von granularem Erntegut in einem Erntegutstrom vergleichbare Messbedingungen erfordert, die eine vergleichbare und präzise Analyse des geförderten granularen Erntegutes ermöglichen. Mittels der Konditioniereinrichtung, die einen eine den Erntegutstrom beeinflussende Oberflächenstruktur aufweisenden Abschnitt umfasst, welche Turbulenzen in dem die Konditioniereinrichtung überströmenden Erntegutstrom erzeugt, kann eine vergleichbare Messbedingung geschaffen werden, die eine zuverlässige optische Erkennung von Bestandteilen im granularem Erntegutstrom mittels der nachgeordneten optischen Sensoreinrichtung ermöglicht.

So kann mittels der erfindungsgemäßen Analysevorrichtung unter Verwendung der optischen Sensoreinrichtung in einem Getreidelager eine Qualitätsbestimmung von an Dritte abgegebenem Erntegut durchgeführt werden. Die Qualität ergibt sich aus der Reinheit des abgegebenem Erntegut, welche durch den Anteil an Besatz im Erntegut, beispielsweise Schmachtkorn, Fremdkorn, Nichtkornbestandteile und dergleichen, bestimmt ist. Die optische Sensoreinrichtung kann somit modular verwendet werden, d.h. während der Erntezeit am Mähdrescher und außerhalb der Erntezeiten bzw. unabhängig von der Nutzung am Mähdrescher an der erfindungsgemäßen Analysevorrichtung, die beispielsweise in ein Fördersystem für ein Getreidelager integrierbar ist.

Die optische Sensoreinrichtung ist als eine Kamera ausgeführt, welche eine Bildserie des geförderten Erntegutstroms aufnimmt, nachdem dieser die Konditioniereinrichtung überströmt hat und dabei durch diese aufgelockert wurde.

Die Konditioniereinrichtung bewirkt, dass das granulare Erntegut vor dem Passieren der optischen Sensoreinrichtung durch das Einbringen von Turbulenzen in den die Konditioniereinrichtung überströmenden Erntegutstrom aufgelockert wird. Der räumliche Abstand zwischen einzelnen Körnern im Erntegutstrom wird hierdurch vergrößert, sodass der Erntegutstrom eine höhere Porosität aufweist als ein durch die Fördervorrichtung linear geförderter Erntegutstrom, der eine hohe Verdichtung aufweist. Die höhere Porosität des Erntegutstroms oberhalb des optischen Erfassungsbereiches der Sensoreinrichtung ermöglicht eine detaillierte Erfassung der Inhaltsstoffe im Erntegutstrom.

Bevorzugt kann der die Oberflächenstruktur aufweisende Abschnitt der Konditioniereinrichtung einen Mindestabstand zu der optischen Sensoreinrichtung aufweisen. Dabei bestimmt sich der Mindestabstand, stromaufwärts gesehen, ausgehend vom Rand der optischen Sensoreinrichtung bis zum Beginn der Oberflächenstruktur des Abschnitts der Konditioniereinrichtung. Der Mindestabstand beträgt, unter Berücksichtigung des Durchmessers der Linse der verwendeten optischen Sensoreinrichtung, bevorzugt mindestens 40 mm.

Insbesondere kann die Oberflächenstruktur stromabwärts zumindest abschnittsweise rampenförmig ansteigend ausgeführt sein. Stromabwärts in Richtung der optischen Sensoreinrichtung gefördertes Erntegut wird durch die zumindest abschnittsweise rampenförmig ansteigende Oberflächenstruktur zumindest anteilig in vertikaler Richtung abgelenkt. Dadurch ist der Anteil am Erntegut, welcher die Linse linear überströmt, minimiert. Durch die zumindest anteilige vertikale Ablenkung wird eine Auflockerung des Erntegutstromes erreicht, was zu einer Erhöhung der Porosität im Erntegutstrom führt. Somit sind die Inhaltsstoffe des Erntegutstroms während des Passierens der optischen Sensoreinrichtung präziser bestimmbar.

Weiter bevorzugt kann der die Oberflächenstruktur aufweisende Abschnitt der Konditioniereinrichtung rechenförmig ausgeführt sein. Hierdurch kann eine Verbesserung des Kontakts zwischen dem strömenden Erntegut und der optischen Sensoreinrichtung gegenüber einer geraden, durchgehenden Kante einer als geneigte Fläche ausgeführten Oberflächenstruktur des Abschnitts erreicht werden. Weiter bevorzugt kann der rechenförmig ausgeführte, die Oberflächenstruktur aufweisende Abschnitt rechteckförmige Zinken oder sich verjüngende Zinken aufweisen. Der rechenförmig ausgeführte Abschnitt kann eine Neigung zwischen 15° und 25° aufweisen.

Gemäß einer alternativen Weiterbildung kann der die Oberflächenstruktur aufweisende Abschnitt der Konditioniereinrichtung durch mehrere parallel nebeneinander angeordnete stabförmige Konditionierelemente mit einer abgerundeten, sich in Längsrichtung der Konditioniereinrichtung erstreckenden Oberkante ausgebildet sein. Die stabförmigen Konditionierelemente können hierfür beispielsweise einen ellipsenförmigen, halbkreisförmigen oder kreisförmigen Querschnitt aufweisen. Alternativ können die stabförmigen Konditionierelemente einen quader- oder rechteckförmigen Querschnitt mit einer abgerundeten Oberkante aufweisen.

Insbesondere können die Konditionierelemente eine Breite von etwa 2 mm aufweisen und mit einem einheitlichen Abstand nebeneinander angeordnet sein, wobei der einheitliche Abstand im Bereich zwischen 4 mm bis 12 mm liegt. Bevorzugt ist ein einheitlicher Abstand von 5 mm bis zu 10 mm zwischen den einzelnen Konditionierelementen vorgesehen.

Des Weiteren können die Konditionierelemente unter einem Winkel zwischen 2° und 6° in Strömungsrichtung ansteigend angeordnet oder ausgeführt sein. Die stabförmigen Konditionierelemente können hierfür einen in Längsrichtung rampenfömig ansteigenden Verlauf aufweisen. Dabei können die stabförmigen Konditionierelemente auf der Oberfläche des Abschnitts angeordnet sein. Alternativ können die stabförmigen Konditionierelemente unter dem Winkel geneigt in die Oberfläche des Abschnitts der Konditioniereinrichtung eingelassen sein. Dies hat den Vorteil, dass die stabförmigen Konditionierelemente einfacher zu fertigen sind.

Gemäß einer Weiterbildung kann der die Oberflächenstruktur aufweisende Abschnitt eine mit sich in Längsrichtung erstreckenden Aussparungen versehene Oberfläche aufweisen, durch die sich jeweils eines der Konditionierelemente erstreckt. Bevorzugt können die Konditionierelemente plattenförmig ausgeführt sein. Die vorzugsweise plattenförmig ausgeführten Konditionierelemente erstecken sich abschnittsweise in vertikaler Richtung über die Oberfläche des Abschnitts hinaus. Dabei sind die vorzugsweise plattenförmig ausgeführten Konditionierelemente unter dem Winkel zwischen 2° und 6° in Strömungsrichtung ansteigend in den sich in Längsrichtung erstreckenden Aussparungen in der Oberfläche des Abschnitts angeordnet.

Bevorzugt kann der die Oberflächenstruktur aufweisende Abschnitt der Konditioniereinrichtung durch zumindest acht Konditionierelemente gebildet sein.

Insbesondere kann ein stromaufwärts liegendes stirnseitiges Ende der Konditionierelemente abgerundet ausgeführt sein. Um eine Beeinträchtigung des Materialflusses durch eine sich am jeweiligen Konditionierelement ausbildende Aufprallkante zu vermeiden, ist das stromaufwärts liegende stirnseitige Ende der Konditionierelemente nicht überstehend und zusätzlich abgerundet ausgeführt.

Bevorzugt kann die Fördervorrichtung als eine Rutsche oder ein Rutschensegment ausgebildet sein, wobei die Neigung der Rutsche oder des Rutschensegmentes verstellbar ist. Damit kann Einfluss auf das Strömungsverhalten, insbesondere auf die Strömungsgeschwindigkeit genommen werden. Insbesondere kann die Rutsche oder das Rutschensegment in ein Fördersystem eines Getreidesilos oder dergleichen integrierbar ausgeführt sein.

Weiterhin kann die Rutsche oder das Rutschensegment in einer horizontalen Förderfläche zumindest eine Ausnehmung zur auswechselbaren Anordnung der Konditioniereinrichtung und der dieser nachgeordneten optischen Sensoreinrichtung aufweisen.

Des Weiteren kann die in der zumindest einen Ausnehmung angeordnete Konditioniereinrichtung mit ihrer sich stromaufwärts erstreckenden Oberfläche bündig mit der Förderfläche der Rutsche oder des Rutschensegmentes abschließen. Um den Austausch von verschiedenen Varianten der Konditioniereinrichtung zu erleichtern, ist die in der Förderfläche der Rutsche oder des Rutschensegmentes ausgebildete Ausnehmung an die äußere Kontur der Konditioniereinrichtung angepasst. Die Konditioniereinrichtung kann von der Unterseite der Rutsche oder des Rutschensegmentes her in die passgenaue Ausnehmung eingesetzt und an der Rutsche oder den Rutschensegment befestigt werden.

Gemäß einer Weiterbildung kann die optische Sensoreinrichtung zur drahtlosen oder drahtgebundenen Übertragung von Daten an die Auswertevorrichtung und/oder zur drahtlosen oder drahtgebundenen Energieversorgung ausgeführt und eingerichtet sein.

Bevorzugt kann die Auswertevorrichtung zum Aufzeichnen und/oder Anzeigen der analysierten Daten und/oder zur Übertragung an eine externe Datenverarbeitungseinrichtung ausgeführt und eingerichtet sein. Hierdurch wird es ermöglicht, einer auf einen Transportwagen überladenen Erntegutmenge eine Zuordnung der mittels der Analysevorrichtung bestimmten Qualitätsdaten vorzunehmen und diese zu dokumentieren.

Die vorliegende Erfindung wird nachstehend anhand von in den Zeichnungen dargestellten Ausführungsbeispielen näher erläutert.

### Es zeigen:

- Fig. 1: schematisch und exemplarisch eine perspektivische Ansicht einer Analysevorrichtung;
- Fig. 2: schematisch und exemplarisch eine perspektivische Ansicht einer Konditioniereinrichtung der Analysevorrichtung;
- Fig. 3: schematisch und exemplarisch eine Seitenansicht der Analysevorrichtung mit einer Konditioniereinrichtung gemäß einer weiteren Ausführungsform;
- Fig. 4: eine Teilansicht der Konditioniereinrichtung gemäß Fig. 3; und
- Fig. 5: eine Teilansicht einer Konditioniereinrichtung gemäß einer weiteren Ausführungsform.

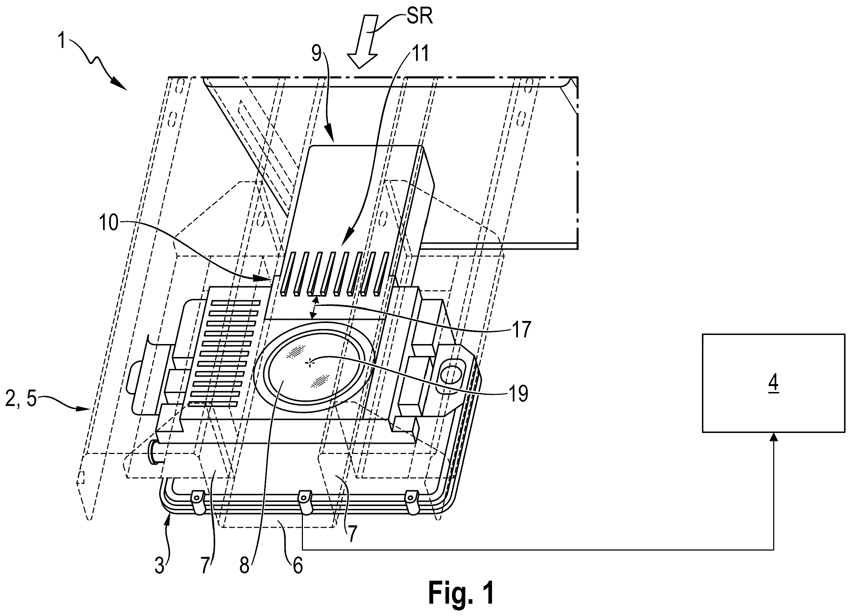

Die Darstellung in Fig. 1 zeigt schematisch und exemplarisch eine perspektivische Ansicht einer Analysevorrichtung 1. Die Analysevorrichtung 1 ist zur Bestimmung der Qualität von granularem Erntegut EG in einem Erntegutstrom eingerichtet. Die Analysevorrichtung 1 umfasst eine Fördervorrichtung 2 für das Erntegut EG, eine optische Sensoreinrichtung 3 zur Erfassung des mittels der Fördervorrichtung 2 in einer Strömungsrichtung SR geförderten Erntegutes EG sowie eine Auswertevorrichtung 4 zur Auswertung von Signalen, insbesondere Bilddaten, die von der Sensoreinrichtung 3 bereitgestellt werden. Die Auswertevorrichtung 4 kann Bestandteil der optischen Sensoreinrichtung 3 sein, d.h. in diese integriert sein. Hierdurch kann die Flexibilität beim Einsatz der optischen Sensoreinrichtung 3 vergrößert werden.

Die Fördervorrichtung 2 ist als eine Rutsche 5 oder ein Rutschensegment ausgebildet. Die Fördervorrichtung 2 kann bevorzugt in ein Fördersystem für granulares Erntegut EG integrierbar sein. Die wannenförmige Rutsche 5 weist einen im Wesentlichen rechteckförmigen Querschnitt auf, innerhalb dessen das granulare Erntegut EG in Strömungsrichtung SR gefördert wird. Die Rutsche 5 weist eine horizontale Förderfläche 6 auf, die von senkrecht hierzu angeordneten Seitenwänden 7 begrenzt ist. Die Neigung der Rutsche 5 ist veränderbar. Die Rutsche 5 weist in ihrer horizontalen Förderfläche 6 zumindest eine Ausnehmung auf.

Die optische Sensoreinrichtung 3 ist hier und vorzugsweise als eine Kamera ausgeführt, welche eine hinter einer Scheibe angeordnete Linse 8 zur Erfassung des die Sensoreinrichtung 3 überströmenden Erntegutes EG aufweist. Die Sensoreinrichtung 3 ist unterhalb der zumindest Ausnehmung in der Förderfläche 6 angeordnet. Die Anbringung und Befestigung der Sensoreinrichtung 3 erfolgt untenseitig an der Rutsche 5.

Die Fördervorrichtung 2 umfasst eine vom Erntegutstrom überströmte Konditioniereinrichtung 9 mit einem der optischen Sensoreinrichtung 3 vorgelagerten Abschnitt 10. Der Abschnitt 10 weist eine den Erntegutstrom beeinflussende Oberflächenstruktur 11 auf. Die Oberflächenstruktur 11 ist dazu ausgeführt und eingerichtet, Turbulenzen in dem die Konditioniereinrichtung 9 überströmenden Erntegutstrom zu erzeugen. Bevorzugt ist der die Oberflächenstruktur 11 aufweisende Abschnitt 10 stromabwärts zumindest abschnittsweise rampenförmig ansteigend ausgeführt. Hierdurch kann das Erntegut EG zumindest anteilig in vertikaler Richtung abgelenkt werden. Das zumindest anteilige in vertikaler Richtung Ablenken des Erntegutes EG bewirkt eine Auflockerung des Erntegutstromes, sodass dieser eine höhere Porosität aufweist als ein linearer Erntegutstrom.

Die Konditioniereinrichtung 9 ist der optischen Sensoreinrichtung 3 vorgeordnet unterhalb der Ausnehmung in der Förderfläche 6 angeordnet. Die lösbare Anbringung und Befestigung der Konditioniereinrichtung 9 erfolgt ebenfalls untenseitig an der Rutsche 5. Die Befestigung von Sensoreinrichtung 3 und Konditioniereinrichtung 9 kann bevorzugt form- und/oder kraftschlüssig erfolgen.

Die Anordnung und Befestigung der Konditioniereinrichtung 9 und der dieser nachgeordneten optischen Sensoreinrichtung 3 an der Unterseite der Rutsche 5 ist derart ausgeführt, dass diese voneinander unabhängig auswechselbar sind. Dies ermöglich die modulare Verwendung der optischen Sensoreinrichtung 3 sowie den Einsatz unterschiedlich ausgestalteter Konditioniereinrichtungen 9, um diese an unterschiedliche Erntegutarten anpassen zu können, deren Qualität mittels der Analysevorrichtung 1 bestimmt werden soll.

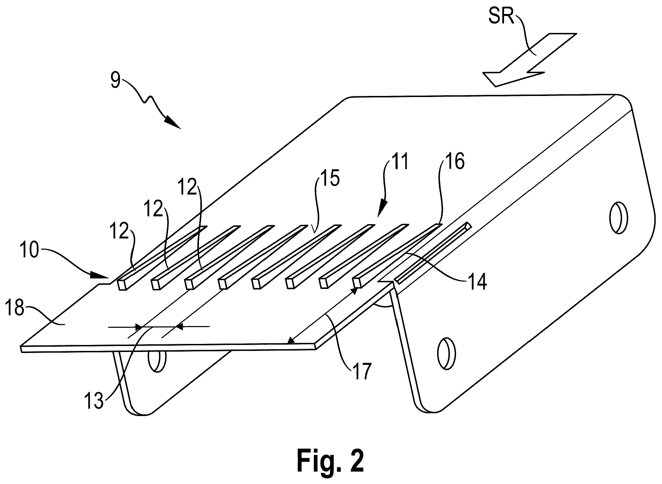

In Fig. 2 ist schematisch und exemplarisch eine perspektivische Ansicht einer bevorzugten Ausführungsform der Konditioniereinrichtung 9 der Analysevorrichtung 1 dargestellt.

Der die Oberflächenstruktur 11 aufweisende Abschnitt 10 der Konditioniereinrichtung 9 ist durch mehrere parallel nebeneinander angeordnete Konditionierelemente 12 ausgebildet. Die Konditionierelemente 12 sind stabförmig ausgeführt und erstrecken sich in Längsrichtung des Abschnitts 10. Die Konditionierelemente 12 sind mit einer quer zur Strömungsrichtung SR verlaufenden abgerundeten Oberkante ausgebildet. Die Oberkante erstreckt sich, in Strömungsrichtung SR gesehen, in Längsrichtung der Konditioniereinrichtung 9.

Die Konditionierelemente 12 weisen bevorzugt eine Breite von etwa 2 mm auf. Die Konditionierelemente 12 sind mit einem einheitlichen Abstand 13 nebeneinander auf dem Abschnitt 10 angeordnet. Der einheitliche Abstand 13 zwischen den Konditionierelemente 12 liegt bevorzugt im Bereich zwischen 4 mm bis 12 mm. Im dargestellten Ausführungsbeispiel beträgt der einheitliche Abstand 13 vorzugsweise 10 mm.

Die Konditionierelemente 12 sind unter einem Winkel zwischen 2° und 6° in Strömungsrichtung SR ansteigend angeordnet. Hier und vorzugsweise beträgt der Winkel 3°. Der Winkel kann in Abhängigkeit von der Erntegutart und/oder der Ausführung der Konditionierelemente 12 variieren. Die Konditionierelemente 12 des die Oberflächenstruktur 11 aufweisenden Abschnitts 10 sind stromabwärts rampenförmig ansteigend ausgeführt.

Der die Oberflächenstruktur 11 aufweisende Abschnitt 10 weist gemäß der in Fig. 2 dargestellten Ausführungsform eine Oberfläche 15 mit sich in Längsrichtung erstreckenden Aussparungen 14 auf. Durch die Aussparungen 14 in der Oberfläche 15 erstreckt sich jeweils eines der, insbesondere plattenförmigen, Konditionierelemente 12. Dabei sind die vorzugsweise plattenförmig ausgeführten Konditionierelemente 12 unter dem Winkel zwischen 2° und 6° in Strömungsrichtung SR ansteigend in den Aussparungen 14 angeordnet.

Bevorzugt kann die Oberflächenstruktur 11 der Konditioniereinrichtung 9 durch zumindest acht Konditionierelemente 12 gebildet sein.

Ein stromaufwärts liegendes stirnseitiges Ende 16 der Konditionierelemente 12 ist abgerundet ausgeführt. Um eine Beeinträchtigung des Materialflusses durch eine sich am jeweiligen Konditionierelement 12 ausbildende Aufprallkante zu vermeiden, ist das stromaufwärts liegende stirnseitige Ende 16 der Konditionierelemente 12 bezogen auf die Oberfläche 15 nicht vertikal überstehend und/oder zusätzlich abgerundet ausgeführt.

Der die Oberflächenstruktur 11 aufweisende Abschnitt 10 der Konditioniereinrichtung 9 weist einen Mindestabstand 17 zu der optischen Sensoreinrichtung 3 auf. Dabei bestimmt sich der Mindestabstand 17 ausgehend vom Rand der Konditioniereinrichtung 9, an welchen die optische Sensoreinrichtung 3 angrenzt, bis zum Beginn der Oberflächenstruktur 11 des Abschnitts 10 der Konditioniereinrichtung 9. Der Mindestabstand 17 beträgt bevorzugt mindestens 40 mm.

Zur Überbrückung des Bereiches zwischen dem Beginn der Oberflächenstruktur 11 des Abschnitts 10 der Konditioniereinrichtung 9 und der nachgeordneten Sensoreinrichtung 3 erstreckt sich ein plattenförmiges Segment 18 bis an den Rand der Sensoreinrichtung 3. Das plattenförmige Segment 18 kann dazu dienen, den Bereich der Ausnehmung in der Förderfläche 6 bis zur angrenzenden Sensoreinrichtung 3 zu verschließen. Das Segment 18 ist wie der dem die Oberflächenstruktur 11 aufweisende Abschnitt 10 vorangehende Bereich der Konditioniereinrichtung 9 eben ausgeführt.

Gemäß einer bevorzugten Ausführungsform der Analysevorrichtung 1 ist vorgesehen, dass zwischen einem Mittelpunkt 19 der Linse 8 und dem Beginn der Oberflächenstruktur 11 des Abschnitts 10 ein Gesamtabstand von mindestens 80 mm vorgesehen ist. Vorzugsweise beträgt der Gesamtabstand etwa 100 mm. Mit diesem Gesamtabstand, der Anzahl an vorgesehenen Konditionierelementen 12 sowie deren Breite und Neigung lassen sich die Messbedingungen im Erfassungsbereich der in einem Kornelevator eines Mähdreschers angeordneten Sensoreinrichtung 3 mit relativ hoher Genauigkeit durch die bzw. in der Analysevorrichtung 1 nachbilden.

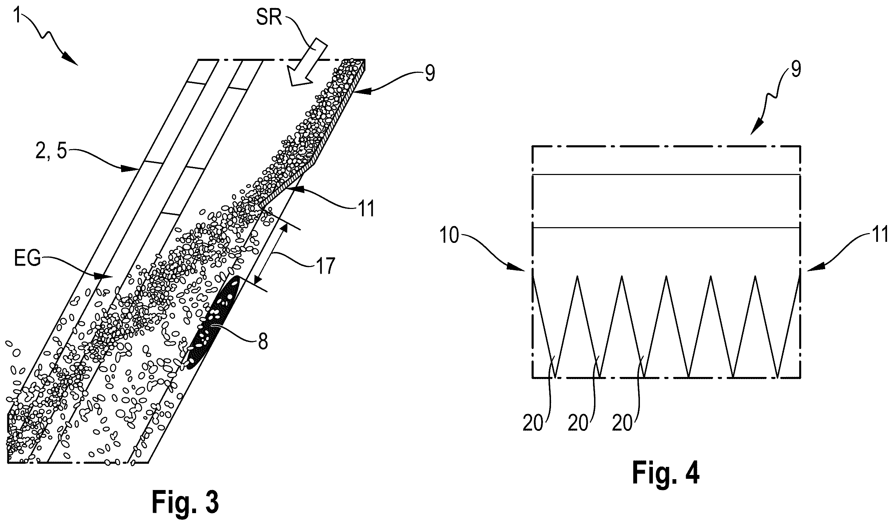

In Fig. 3 ist schematisch und exemplarisch eine Seitenansicht der Analysevorrichtung 1 mit einer Konditioniereinrichtung 9 gemäß einer weiteren Ausführungsform dargestellt.

Der die Oberflächenstruktur 11 aufweisende Abschnitt 10 ist stromabwärts abschnittsweise rampenförmig ansteigend ausgeführt. Hierzu ist der die Oberflächenstruktur 11 aufweisende Abschnitt 11 bevorzugt rechenförmig ausgeführt, wie in Fig. 4 dargestellt.

Fig. 4 stellt eine Teilansicht der Konditioniereinrichtung 9 gemäß Fig. 3 dar. Der vorzugsweise rechenförmig ausgeführte, die Oberflächenstruktur 11 aufweisende Abschnitt 10 kann rechteckförmige Zinken oder sich verjüngende Zinken 20 aufweisen. Der rechenförmig ausgeführte Abschnitt 10 der Konditioniereinrichtung 9 kann eine Neigung zwischen 15° und 25° aufweisen. Der Mindestabstand 17 bei dieser Ausführungsform der Konditioniervorrichtung 9 beträgt bevorzugt ebenfalls mindestens 40 mm.

Die Darstellung in Fig. 3 veranschaulicht exemplarisch den Einfluss der Konditioniervorrichtung 9 der Analysevorrichtung 1 auf den Erntegutstrom. Die Konditioniereinrichtung 9 bewirkt, dass granulares Erntegut EG vor dem Passieren der optischen Sensoreinrichtung 3 durch das Einbringen von Turbulenzen in den die Konditioniereinrichtung 9 überströmenden Erntegutstrom aufgelockert wird. Der räumliche Abstand zwischen einzelnen Körnern im Erntegutstrom wird hierdurch vergrößert, sodass der Erntegutstrom eine höhere Porosität aufweist als ein durch die Fördervorrichtung 2 in diesem Bereich linear geförderter Erntegutstrom. Die höhere Porosität oberhalb der Linse 8 ermöglicht eine detailliertere Erfassung der Inhaltsstoffe im Erntegutstrom.

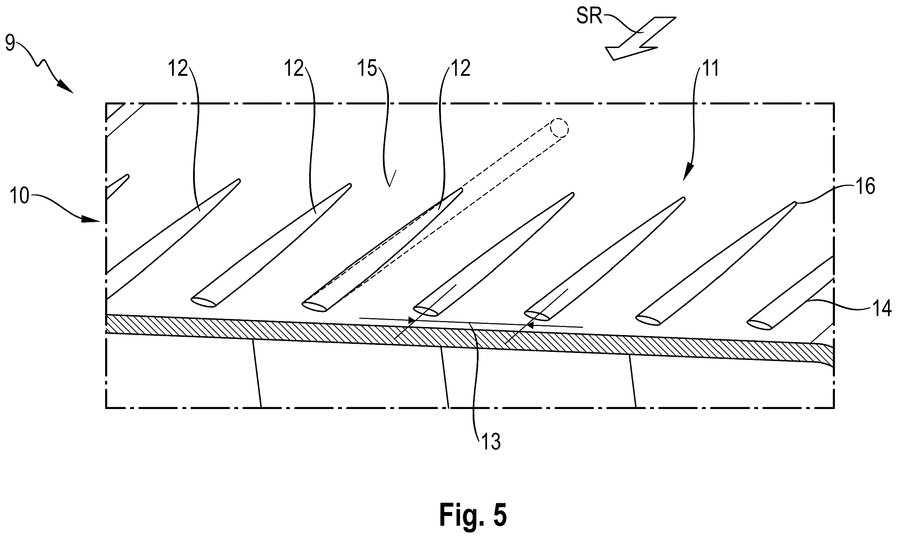

Die Darstellung in Fig. 5 zeigt eine Teilansicht einer Konditioniereinrichtung 9 gemäß einer weiteren Ausführungsform. Der die Oberflächenstruktur 11 aufweisende Abschnitt 10 der Konditioniereinrichtung 9 weist gemäß der in Fig. 5 dargestellten Ausführungsform eine mit sich in Längsrichtung erstreckenden Aussparungen 14 versetzte Oberfläche 15 auf analog zur Ausführungsform gemäß Fig. 2. Die Konditionierelemente 12 sind gemäß dieser Ausführungsform der Konditioniereinrichtung 9 als Rundstäbe ausgeführt, die in den Aussparungen 14 angeordnet sind. Die als Rundstäbe ausgeführten Konditionierelemente 12 sind ebenfalls unter einem Winkel zwischen 2° und 6° in Strömungsrichtung SR ansteigend in den Aussparungen 14 angeordnet.

Eine weitere alternative Ausführungsform der Konditionierelemente 12 kann darin bestehen, das die stabförmigen Konditionierelemente 12 einen halbkreisförmigen Querschnitt aufweisen können. Der halbkreisförmige Querschnitt der stabförmigen Konditionierelemente 12 könnte dabei einen in Strömungsrichtung SR zunehmenden Radius aufweisen. Die einen halbkreisförmigen Querschnitt aufweisenden Konditionierelemente 12 können dabei stoffschlüssig mit der Oberfläche 15 des Abschnitts 10 verbunden sein. Somit kann auf die Aussparungen 14 in der Oberfläche verzichtet werden.

Die in der Analysevorrichtung 1 verwendete optische Sensoreinrichtung 3 ist zur drahtlosen oder drahtgebundenen Übertragung von Daten an die Auswertevorrichtung 4 und/oder zur drahtlosen oder drahtgebundenen Energieversorgung ausgeführt und eingerichtet. Die insbesondere drahtlose Datenübertragung und Energieversorgung zumindest der Sensoreinrichtung 3 vereinfacht die modulare Anwendbarkeit der Sensoreinrichtung 3, um diese wechselweise am Mähdrescher und unabhängig vom Mähdrescher in der erfindungsgemäßen Analysevorrichtung 1 einzusetzen.

Bevorzugt kann die Auswertevorrichtung 4 zum Aufzeichnen und/oder Anzeigen der analysierten Daten und/oder zur Übertragung an eine externe Datenverarbeitungseinrichtung ausgeführt und eingerichtet sein. Hierdurch wird es ermöglicht, einer auf einen Transportwagen überladenen Erntegutmenge eine Zuordnung der mittels der Analysevorrichtung 1 bestimmten Qualitätsdaten vorzunehmen und zu dokumentieren.

### Bezugszeichenliste

- 1: Analysevorrichtung
- 2: Fördervorrichtung
- 3: Sensoreinrichtung
- 4: Auswerteeinrichtung
- 5: Rutsche
- 6: Förderfläche
- 7: Seitenwand
- 8: Linse
- 9: Konditioniereinrichtung
- 10: Abschnitt
- 11: Oberflächenstruktur
- 12: Konditionierelement
- 13: Abstand
- 14: Aussparung
- 15: Oberfläche
- 16: Stirnseitiges Ende
- 17: Mindestabstand
- 18: Segment
- 19: Mittelpunkt
- 20: Zinken

- EG: Erntegut
- SR: Strömungsrichtung

## Patentansprüche

1. Analysevorrichtung (1) zur Bestimmung der Qualität von granularem Erntegut (EG) in einem Erntegutstrom, mit einer Fördervorrichtung (2) für das Erntegut (EG), einer optischen Sensoreinrichtung (3) zur Erfassung des mittels der Fördervorrichtung (2) in einer Strömungsrichtung (SR) geförderten Erntegutes (EG) sowie einer Auswertevorrichtung (4) zur Auswertung von Signalen der Sensoreinrichtung (13), **dadurch gekennzeichnet, dass** die Fördervorrichtung (2) eine vom Erntegutstrom überströmte Konditioniereinrichtung (9) mit einem der optischen Sensoreinrichtung (3) vorgelagerten Abschnitt (10) umfasst, welcher eine den Erntegutstrom beeinflussende Oberflächenstruktur (11) aufweist, wobei die Oberflächenstruktur (11) dazu ausgeführt und eingerichtet ist, Turbulenzen in dem die Konditioniereinrichtung (9) überströmenden Erntegutstrom zu erzeugen.

2. Analysevorrichtung (1) nach Anspruch 1, **dadurch gekennzeichnet, dass** der die Oberflächenstruktur (11) aufweisende Abschnitt (10) der Konditioniereinrichtung (9) einen Mindestabstand (17) zu der optischen Sensoreinrichtung (3) aufweist.

3. Analysevorrichtung (1) nach Anspruch 1 oder 2, **dadurch gekennzeichnet, dass** der die Oberflächenstruktur (11) aufweisende Abschnitt (10) stromabwärts zumindest abschnittsweise rampenförmig ansteigend ausgeführt ist.

4. Analysevorrichtung (1) nach einem der Ansprüche 1 bis 3, **dadurch gekennzeichnet, dass** der die Oberflächenstruktur (11) aufweisende Abschnitt (10) rechenförmig ausgeführt ist.

5. Analysevorrichtung (1) nach einem der Ansprüche 1 bis 3, **dadurch gekennzeichnet, dass** der die Oberflächenstruktur (11) aufweisende Abschnitt (10) der Konditioniereinrichtung (9) durch mehrere parallel nebeneinander angeordnete stabförmige Konditionierelemente (12) mit einer abgerundeten, sich in Längsrichtung der Konditioniereinrichtung (12) erstreckenden Oberkante ausgebildet sind.

6. Analysevorrichtung (1) nach Anspruch 5, **dadurch gekennzeichnet, dass** die Konditionierelemente (12) eine Breite von etwa 2 mm aufweisen und mit einem einheitlichen Abstand (13) nebeneinander angeordnet sind, wobei der einheitliche Abstand (13) im Bereich zwischen 4 mm bis 12 mm liegt.

7. Analysevorrichtung (1) nach Anspruch 5 oder 6, **dadurch gekennzeichnet, dass** die Konditionierelemente (12) unter einem Winkel zwischen 2° und 6° in Strömungsrichtung (SR) ansteigend angeordnet oder ausgeführt sind.

8. Analysevorrichtung (1) nach einem der Ansprüche 5 bis 7, **dadurch gekennzeichnet, dass** der die Oberflächenstruktur (11) aufweisende Abschnitt (10) eine mit sich in Längsrichtung erstreckenden Aussparungen (14) versehene Oberfläche (15) aufweist, durch die sich jeweils eines der, insbesondere plattenförmigen, Konditionierelemente (15) erstreckt.

9. Analysevorrichtung (1) nach einem der Ansprüche 5 bis 8, **dadurch gekennzeichnet, dass** die Oberflächenstruktur (11) durch zumindest acht Konditionierelemente (12) gebildet ist.

10. Analysevorrichtung (1) nach einem der Ansprüche 5 bis 9, **dadurch gekennzeichnet, dass** ein stromaufwärts liegendes stirnseitiges Ende (16) der Konditionierelemente (12) abgerundet ausgeführt ist.

11. Analysevorrichtung (1) nach einem der vorangehenden Ansprüche, **dadurch gekennzeichnet, dass** die Fördervorrichtung (2) als eine Rutsche (5) oder ein Rutschensegment ausgebildet ist, wobei die Neigung der Rutsche (5) oder des Rutschensegmentes verstellbar ist.

12. Analysevorrichtung (1) nach Anspruch 11, **dadurch gekennzeichnet, dass** die Rutsche (5) oder das Rutschensegment in einer horizontalen Förderfläche (6) zumindest eine Ausnehmung zur auswechselbaren Anordnung der Konditioniereinrichtung (9) und der dieser nachgeordneten optischen Sensoreinrichtung (3) aufweist.

13. Analysevorrichtung (1) nach Anspruch 12, **dadurch gekennzeichnet, dass** die in der zumindest einen Ausnehmung angeordnete Konditioniereinrichtung (12) mit ihrer sich stromaufwärts erstreckenden Oberfläche (15) bündig mit der Förderfläche (6) der Rutsche (5) abschließt.

14. Analysevorrichtung (1) nach einem der vorangehenden Ansprüche, **dadurch gekennzeichnet, dass** die optische Sensoreinrichtung (3) zur drahtlosen oder drahtgebundenen Übertragung von Daten an die Auswertevorrichtung (4) und/oder zur drahtlosen oder drahtgebundenen Energieversorgung ausgeführt und eingerichtet ist.

15. Analysevorrichtung (1) nach einem der vorangehenden Ansprüche, **dadurch gekennzeichnet, dass** die Auswertevorrichtung (4) zum Aufzeichnen und/oder Anzeigen der analysierten Daten und/oder zur Übertragung an eine externe Datenverarbeitungseinrichtung ausgeführt und eingerichtet ist.
